Europäisches Patentamt

European Patent Office (11) Publication number: **0 065 315**

Office européen des brevets A2

(12) **EUROPEAN PATENT APPLICATION**

(21) Application number: **82104360.1**

(51) Int. Cl.³: **F 02 B 27/00**

(22) Date of filing: **18.05.82**

(30) Priority: **18.05.81 JP 74459/81**

(43) Date of publication of application: **24.11.82**
**Bulletin 82/47**

(84) Designated Contracting States: **DE FR GB**

(71) Applicant: **Yamaha Motor Co., Ltd., 2500 Shingai,**
**Iwata-shi Shizuoka-ken (JP)**

(72) Inventor: **Yamamoto, Masahiro, 266-115 Shimohongo**
**Toyoda-cho, Iwata-gun Shizuoka-ken (JP)**
Inventor: **Mizoguchi, Masayasu, 2426-31 Mitsuke,**
**Iwata-shi Shizuoka-ken (JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath,**
**Maximilianstrasse 43, D-8000 München 22 (DE)**

(54) **Intake system for two-cycle internal combustion engines.**

(57) A two-cycle internal combustion engine having its intake passage (11) equipped with a check valve (12) and an intake plenum chamber (17), the latter being formed in the crankcase wall of the engine just below the intake passage. The crankcase wall below said intake passage is formed with an opening (1b) and a cover (15) is provided to surround said opening. A diaphragm (16) is sandwiched between said crankcase and said cover, so that the cover and the diaphragm define together an intake plenum chamber (17).

# INTAKE SYSTEM FOR TWO-CYCLE INTERNAL COMBUSTION ENGINES

The present invention relates to an improvement in a crankroom precompression type two-cycle internal combustion engine and, more particularly to such an engine in which an intake passage and a crankroom are partitioned by means of a movable wall.

In the crankroom precompression type two-cycle internal combustion engine, generally speaking, since a lubricant cannot be reserved in the crankroom, an air-fuel mixture is mixed with a small quantity of lubricant thereby to lubricate a cylinder and a crankshaft. According to this system, the lubricant may be carried to the outside by an engine exhaust gas to produce a smoke. In order to eliminate this, therefore, there is known in the art (e.g. Japanese Utility Model Laid-Open No. 55 - 12022 or U.S.P. No. 2,745,390 or 3,195,526) a concept, in which an intake plenum chamber adapted to be expanded or contracted by the action of the pressure in the crankroom is formed in an intake passage leading to a scavenging port thereby to prevent the air-fuel mixture from being introduced into the crankroom and to reserve the lubricant in the crankroom.

However, it is difficult for the engine of that kind to retain a large space which can be used as the intake plenum chamber. On the other hand, if a movable wall forming the intake plenum chamber is made to have a special shape or made of a bellows so as to retain the capacity of the intake plenum chamber, its operating speed is retarded to block the highspeed running operation of the engine.

The invention as claimed is intended to provide a remedy. It solves the problem of providing a large volume intake plenum chamber without raising any obstructions.

The advantages offered by the invention are mainly that although the external size of the crankcase is enlarged by the addition of the intake plenum chamber, this does not result in an obstruction. Moreover, since the inside of the intake plenum chamber is subjected to the heat which is transferred through the crankcase, the fuel in the air-fuel-mixture introduced into the intake plenum chamber can be gasified again and introduced into the combustion chamber, even if liquidified. Moreover, since there is a space for forming the movable wall into a circular shape, the external shape of the movable wall can be reduced to excellently follow the pressure change in the crankcase, so that the usable r.p.m. range of the engine can be increased. Furthermore, since the movable wall is clamped on the outer side of the crankcase, it can be easily attached thereto, without increasing the capacity of the crankcase, thereby to provide an effect that a pressure change can be established. One way of carrying out the invention is described in detail below, with reference to a drawing illustrating one specific embodiment.

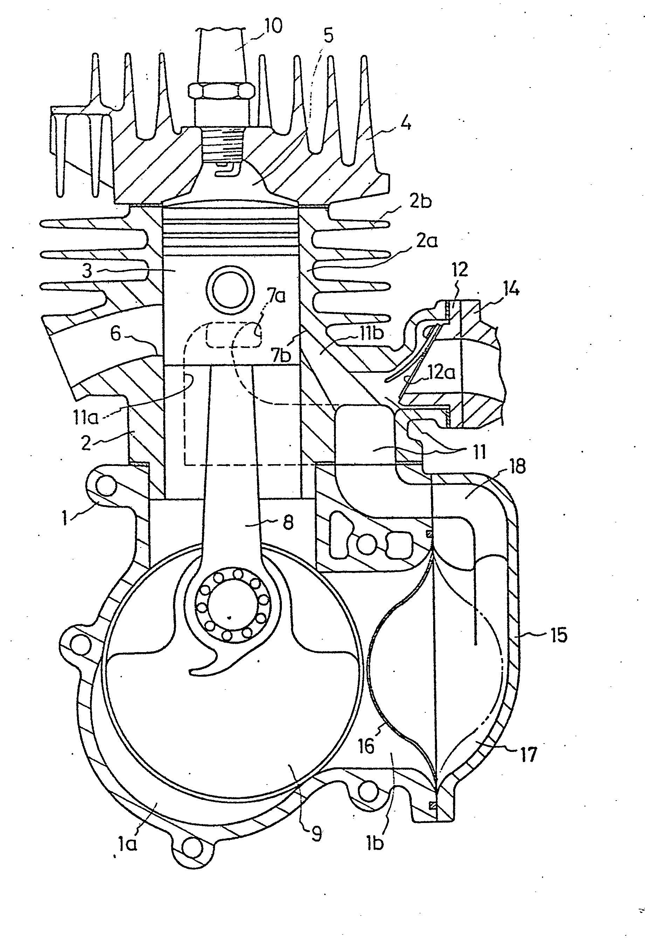

The accompanying drawing is a sectional view showing the two-cycle internal combusion engine according to one embodiment of the present invention.

The beneficial performance of the inventive internal combustion engine results out of the inventive provision of an intake plenum chamber which is formed to face the wall of the crankcase just below an intake passage.

In the drawing, reference numeral 1 indicates a crankcase, on the top surface there is mounted a cylinder 2. This cylinder 2 is equipped with a combustion chamber 5 which is defined in the cylindrical wall 2a thereof by a piston 3 and a cylinder head 4. Numeral 2b indicates a plurality of cooling fins which are formed on the outer circumference of the cylindrical wall 2a. This cylindrical wall 2a is formed with an exhaust port 6 and a scavenging port which is composed of a main scavenging port 7a and an auxiliary scavenging port 7b. All of these ports are opened and closed by the piston 3 which is connected to the crankshaft 9 through a connecting rod 8. Numeral 10 indicates an ignition plug. With the main scavenging port 7a and the auxiliary scavenging port 7b, there are connected a main branch passage 11a and an auxiliary branch passage 11b, respectively, which extend toward the jointed surfaces of the crankcase 1 and the cylinder 2 until they merge at those jointed surfaces into an intake passage 11 which is arranged generally in an annular shape in the outer circumference of the cylindrical wall 2a. The intake passage 11 thus formed has its upstream end vented to the atmosphere by way of a check valve 12 and a carburetor 14. The check valve 12 is the so-called "reed valve", which is equipped with a valve member 12a made of a thin steel plate for allowing a forward air flow toward the scavenging ports 7a and 7b but blocking the backward flow. The crankcase 1 is made to have a capacity as small as possible except that it is formed with a lubricant sump 1a at its lower portion.

On the other hand, the crankcase wall below the intake passage 11 is formed with an opening 1b for providing communication between the inside and outside, and a cover 15 bulging outward is removably attached, to surround said opening to the outer side of the crankcase wall by means of bolts or others. Numeral 16 indicates a movable wall or a diaphragm which is sandwiched between the aforementioned crankcase 1 and the cover 15 and which is made of rubber or a rubber-like synthetic resin generally in the form of a circle. Thus, the cover 15 and the movable wall 16 define together an intake plenum chamber 17. Numeral 18 indicates a commun-ication passage which connects the intake plenum chamber 17 and the intake passage 11.

The operations of the two-cycle engine thus constructed will be described in the following. First of all, when the piston 3 ascends, the pressure in the crankcase 1 is dropped so that the movable wall 16 so bulges into the crankcase 1 as is indicated by solid lines. Since, at this time, the respective scavenging ports 7a and 7b are closed by the piston 3, the air-fuel mixture prepared by the carburetor 14 flows into the intake plenum chamber 17 by way of the check valve 12. Next, when the piston 3 starts its descending stroke, the pressure in the crankcase 1 is boosted so that the movable wall 16 bulges into the cover 17 as is shown by a double-dotted line thereby to reduce the capacity therein. Since the mixture in the intake plenum chamber 17 is blocked from flowing backward by the check valve 12, it flows into the combustion chamber 5 simultaneously as the scavenging ports 7a and 7b are opened. Subsequently, the mixture is compressed by the piston 3 and ignited for combustion by the ignition plug 10 similarly to the usual two-cycle engine until it is discharged to the atmosphere by way of the exhaust port 6 during the descending stroke of the piston 3.

The operations of the movable wall 16 are performed in the aforementioned manners in association with the changes in the pressure in the crankcase 1 and the mixture is introduced into the combustion chamber 5 while bypassing the inside of the crankcase 1.

As has been described hereinbefore, according to the present invention, in the two-cycle engine having its intake passage equipped with the check valve and the intake plenum chamber, this plenum chamber 17 is formed in the crankcase wall just below the intake passage 11. As a result, although the external size of the crankcase is enlarged by the addition of the intake plenum chamber, this plenum chamber is located just below the intake passage so that is raises no obstruction. Moreover, since the inside of the intake plenum chamber is subjected to the heat which is transferred through the crankcase, the fuel in the mixture introduced into the intake plenum chamber can be gasified again and introduced into the combustion chamber, even if it is liquified, so that it never resides therein. Still moreover, since there is a space for forming the movable wall into a circular shape, the external shape of the movable wall can be reduced to excellently follow the pressure change in the crankcase so that the usable r.p.m. range of the engine can be increased. Furthermore, since the movable wall is clamped on the outer side of the crankcase, it can be easily attached thereto without increasing the capacity of the crankcase

thereby to provide an effect that a pressure change can be established.

As in the embodiment thus far described, incidentally, if the intake passage 11 is formed in such a lower side of the cylinder as contacts with the crankcase and if the main branch passage 11a connecting the intake passage 11 and the main scavenging port 7a is formed in the same direction as the cylindrical wall 2, then it can be dyecast to have its productivity improved.

CLAIMS

1. A two-cycle internal combustion engine of the type in which a cylinder (2) is mounted on a crankcase (1), in which said cylinder has its cylindrical wall (2a) formed with at least one scavenging port (7a) adapted to be opened and closed by a piston (3), in which there is connected with said scavenging port an intake passage (11) then into the atmosphere, and in which there is formed in said intake passage an intake plenum chamber (17) having a movable wall (16) facing the inside of said crankcase, characterized in that in the wall of said crankcase, just below said intake passage (11) there is provided an opening (1b) for providing communication between the inside and outside of said crankcase; in that there is disposed outside of said opening an outwardly bulging cover (15); and in that a circular movable wall (16) is sandwiched between said cover and said crankcase thereby defining said intake plenum chamber (17) inside of said cover (15).

2. Engine according to claim 1, characterized in that there is disposed in said intake passage (11) a check valve (12) for allowing only an air-fuel-mixture flow toward said scavenging port (7a) but blocking any backward flow, and in that said intake plenum chamber (17) is, within said intake passage, located downstream of said check valve (12).

3. Engine according to one of claims 1 and 2, characterized in that said intake passage (11) is arranged in a generally angular shape in the outer circumference of said cylindrical wall (2a).

4. Engine according to one of claims 1 to 3, characterized in that said movable wall is a

diaphragm (16) made of rubber or a rubber-like synthetic resin.

5. Engine according to one of claims 1 to 4, characterized in that a communication passage (18) is provided to connect said intake plenum chamber (17) and said intake passage (11).

6. Engine according to one of claims 1 to 5, characterized in that said movable wall (16) is fixed to the outer side of said crankcase (1) for closing said opening (1b) within said crankcase wall.

7. Engine according to one of claims 1 to 6, characterized in that said plenum chamber (17) is formed in the crankcase wall just below said intake passage (11).

8. Engine according to one of claims 1 to 7, characterized in that said intake passage (11) is formed in the lower portion of the cylinder (2) which contacts said crankcase (11) and that a main branch passage (11a) connecting said intake passage (11) and a main scavenging port (7a) are formed in the same direction as the cylindrical wall (2a).